(19) **Europäisches Patentamt**

**European Patent Office**

**Office européen des brevets**

(11) **EP 1 061 090 A1**

(12) **EUROPEAN PATENT APPLICATION**

(43) Date of publication:
**20.12.2000 Bulletin 2000/51**

(51) Int. Cl.[7]: **C08F 10/00**, C08F 2/00, C08F 2/34, C08F 2/44, C08F 4/68

(21) Application number: **00304999.6**

(22) Date of filing: **13.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.06.1999 US 332719**

(71) Applicant:
**UNION CARBIDE CHEMICALS & PLASTICS TECHNOLOGY CORPORATION**
**Danbury, Connecticut 06817-0001 (US)**

(72) Inventors:
• **Bai, Xinlai**
  **Piscataway, New Jersey 08854 (US)**
• **Cann, Kevin Joseph**
  **Rocky Hill, New Jersey 08553 (US)**
• **Vasnetsov, Sergey**
  **Jersey City, New Jersey 07302 (US)**

• **Hussein, Fathi David**
  **Cross Lane, West Virginia 25303 (US)**
• **Zilker Jr.,**
  **Daniel Paul**
  **Charleston, West Virginia 25314 (US)**
• **Lee, Kiu Hee**
  **South Charleston, West Virginia 25303 (US)**
• **Rebhan, David Merrill**
  **Alum Creek, West Virginia 25003 (US)**
• **Desai, Kishor**
  **North Bergen, New Jersey 07047 (US)**

(74) Representative:
**Hayes, Adrian Chetwynd et al**
**Boult Wade Tennant,**
**Verulam Gardens**
**70 Gray's Inn Road**
**London WC1X 8BT (GB)**

(54) **Reduction of oligomer and gel formation in polyolefins**

(57)     There is provided a method for reducing or suppressing the formation of gels, oligomers, or both in a gas phase polymerization of at least one olefin or diolefin monomer conducted in the presence of a vanadium catalyst, which method comprises the addition of at least one sacrificial monomer or Lewis base.

**EP 1 061 090 A1**

## Description

### Field of the Invention

The invention relates to the polymerization of one or more alpha olefin monomers and optionally a diene. More particularly, the invention relates to the reduction of oligomer formation and gel formation by using sacrificial monomers or Lewis bases in such polymerizations, e.g., gas fluidized, especially those employing a vanadium catalyst.

### Background of the Invention

Oligomerization is an undesirable side reaction in the production of homopolymers and copolymers of alpha olefin monomers and in the production of ethylene-propylene rubbers (EPR) including those containing a diene such as ethylidene norbornene (ENB). By oligomerization is meant the formation (from monomer) of polymers or polymer intermediates containing relatively few structural units. Usually oligomers have low molecular weights.

Gel formation is the change that occurs in a polymer product where it takes on the consistency of a slightly, partially or extensively crosslinked polymer. Gel and oligomer formation is a problem because it (1) wastes monomers, (2) results in reactor fouling, (3) causes odor in the polymer produced, and (4) results in a polymer having poor product performance. Both oligomer formation and gel formation become more severe in gas phase polymerization processes utilizing a fluidized bed.

There is an on-going need to reduce gel and/or oligmerization in the gas phase polymerization of polymers such as polyolefins of polyethylene and ethylene-propylene rubbers (EPR, EPM, and EPDM) in the presence of a vanadium catalyst system.

### Summary of the Invention

Accordingly, there is provided a method for reducing the formation of gels, oligomers, or both in a gas phase polymerization of at least one olefinic or diolefinic monomer in the presence of a vanadium catalyst system and an inert particulate material, which method comprises the adding at least one sacrificial monomer or Lewis base.

### Detailed Description of the Invention

Use of Sacrificial Monomers and/or Lewis Bases. Both oligomer formation and gel formation become more severe in gas phase processes than in slurry and solution processes. Oligomer and gel formation are both attributed to the generation of acidic sites as part of the catalyst system. It has been found that oligomer and gel formation can both be reduced by the addition of sacrificial monomers or Lewis bases to the polymerization process and/or during post reactor purging.

Sacrificial monomers are highly reactive olefins that selectively react with the acidic aluminum sites and eliminate the sites from further oligomerization or gel formation reactions. Lewis bases serve to neutralize the acidity of the aluminum site to also reduce oligomerization and gel formation. It is preferred to employ sacrificial monomers to suppress oligomer and gel formation in EPMs (ethylene-propylene monomers). Lewis bases can be used to suppress oligomer and gel formation in EPMs and EPDM (ethylene-propylene-diene monomer). Some Lewis bases such as phenols, particularly sterically hindered phenols, such as 2,6-di-tertbutylphenol (DTBP), butylated hydroxy toluene (BHT), and Vitamin E, for example, can also function as antioxidants.

These components can be added intermittently to the polymerization in response to oligomerization or gel formation. However, it is preferred to add them continuously to the polymerization. The sacrificial olefins and/or Lewis bases can be added directly to the reactor itself at a variety of locations. Such locations can include, for example, injection directly into the bed of forming polymer, introduction above the bed such as into the entrainment section of a reactor, into the recycle lines (before and after the compressor, condenser, and/or heat exchanger), and into the reactor along with a catalyst component and/or with the monomer. Preferably, the sacrificial olefin or Lewis base is fed to the reactor by placing an additional feeding line into the reactor system. It is also preferred to add or feed the sacrificial olefin or Lewis base into the reactor with at least one of the monomers employed. For example, DTBP, BHT, and/or vitamin E can be mixed with a monomer such as ENB for feeding to the reactor.

The sacrificial monomer and/or Lewis base may be added to the polymerization reaction by a variety of methods depending upon the polymerization process being used and the particular sacrificial monomer or Lewis base employed. It may be added in neat form or it may be added as a solution (e.g., 0.1 to 10 wt.%). Depending upon its solubility, the sacrificial monomer or Lewis base, appropriate diluents may include a monomer or a hydrocarbon such as toluene or isopentane.

Alternatively to, or in addition to adding a sacrificial monomer and/or a Lewis base to the polymerization reactor, these components also can be introduced as part of a post reactor processing. When used in post reactor processing, these components are preferably added to the product in the holding tank or during purging. Such purging can take place in one or two steps. During purging, the produced polymer is subjected first to purging in an inert gas, typically nitrogen, to remove unreacted monomers (e.g., ethylene, propylene, and optionally a diene). Purging under an inert atmosphere is then preferably followed by purging in air and/or moist air. It is most preferred to include a sacrificial monomer or a Lewis base as the polymer is being purged with the inert gas to reduce gel formation and/or oligomerization. Purging schemes and apparatus are well-known and disclosed, for example, in U.S. Ser. Nos. 09/098,479 and 09/099,881. In an especially preferred embodiment hindered phenols such as DTBP, Vitamin E (also called an α-tocopherol or 2,5,7,8-tetramethyl-2-(4',8',12'-trimethyltridecyl)-6-chromanol), and/or BHT are introduced into the reactor during polymerization as well as again when the produced polymer is purged or degassed.

Sacrificial monomers can be selected from the group consisting of olefinic and diolefinic hydrocarbons and vinyl aromatic compounds The preferred sacrificial monomers include ethylidene norbornene (ENB), norbornene, isobutylene, alpha-methyl styrene, isoprene, methyl octadienes, and higher alpha olefins such $C_4$-$C_{20}$ hydrocarbons, especially as hexene. Of these, ethylidene norbornene and norbornene are most preferred.

Lewis bases applicable to the invention are those containing heteroatoms (e.g., oxygen, nitrogen, and sulfur containing compounds). They can be selected from the group consisting of ethers, alcohols (including phenols), ketones, aldehydes, carboxylic acids, esters, carbonates, phosphines, phosphine oxides, phosphates, phosphites, amines, amides, nitriles, alkoxy silanes, aluminum alkoxides, water, oxygen, nitric oxides, and the like.

The ethers include aliphatic ethers, cycloaliphatic ethers, aromatic ethers, monoethers, diethers, tetraethers, polyethers and the like. Particularly useful ethers are aliphatic monoethers and cycloaliphatic monoethers containing from 2 to 20 carbon atoms. Other particularly useful ethers are aliphatic diethers and cycloaliphatic diethers containing from 3 to 20 carbon atoms. Still other particularly useful ethers are aromatic ethers, aliphatic triethers, and aliphatic tetraethers containing from 7 to 20 carbon atoms. Preferred ethers are dimethyl ether, diethyl ether, tetrahydrofuran, dioxane, 2,5,8,11,14-pentaoxopentadecane, methoxy benzene, and 1,2-dimethoxy ethane.

Particularly useful alcohols include aliphatic alcohols containing from 1 to 20 carbon atoms, glycols containing from 2 to 20 carbon atoms, aromatic alcohols, and cycloaliphatic alcohols containing from 6 to 20 carbon atoms. Preferred alcohols are methyl alcohol, ethyl alcohol, isopropanol, 2-ethyl-1-hexanol, cyclohexanol, ethylene glycol, glycerine, phenol, 2,6-di-tertbutylphenol, and propylene glycol. When the alcohol is a phenol it is preferably BHT (butylated hydroxy toluene), isopropyl phenol, and/or 2,6-di-tert-butyl phenol.

Particularly useful ketones are aliphatic monoketones, cycloaliphatic monoketones, and cycloaliphatic diketones containing from 3 to 20 carbon atoms. Other useful ketones are aromatic ketones containing from 8 to 20 carbon atoms and aliphatic diketones containing from 5 to 20 carbon atoms. Preferred ketones are acetone, cyclohexanone, 1,4-cyclohexanedione, acetophenone, benzophenone, acetylacetone, and diethyl ketone.

Aldehydes having utility in the present invention are aliphatic aldehydes containing from 2 to 20 carbon atoms and aromatic aldehydes containing from 7 to 20 carbon atoms. Preferred aldehydes are acetaldehyde and benzaldehyde.

Useful esters in the invention are aliphatic monoesters, cycloaliphatic monoesters, and cycloaliphatic diesters containing from 3 to 20 carbon atoms. Others useful esters can include aromatic esters containing from 8 to 20 carbon atoms and aliphatic diesters containing from 5 to 20 carbon atoms. Preferred esters are methyl acetate, ethyl actetate, ε-caprolactone, methyl benzoate, diisobutylphthalate, and dimethyl malonate.

Particularly useful carboxylic acids are aliphatic carboxylic acids containing from 2 to 20 carbon atoms and aromatic carboxylic acids containing from 7 to 20 carbon atoms. Preferred carboxylic acids are stearic acid and benzoic acid.

Carbonates useful in the invention are aliphatic and cycloaliphatic carbonates containing from 3 to 20 carbon atoms. Preferred carbonates are dimethyl carbonate, diethyl carbonate, ethylene carbonate, and 1,3-dioxolan-2-one.

Particularly useful phosphines, phosphine oxides, phosphates, and phosphites contain aliphatic moieties with from 1 to 12 carbon atoms, aromatic moieties with from 6 to 12 carbon atoms, cycloaliphatic moieties with from 4 to 12 carbon atoms, and mixtures thereof. Preferred phosphines, phosphine oxides, phosphates, and phosphites are trimethyl phosphine, triisopropyl phosphine, triphenyl phosphine, tricyclohexyl phosphine, trimethyl phosphine oxide, triisopropyl phosphine oxide, triphenyl phosphine oxide, tricyclohexyl phosphine oxide, trimethyl phosphate, triisopropyl phosphate, triphenyl phosphate, tricyclohexyl phosphate, trimethylphosphite, triisopropyl phosphite, triphenyl phosphite, and tricyclohexyl phosphite.

Particularly useful amines and amides are those containing hydrogen such as aliphatic moieties with from 1 to 12 carbon atoms, aromatic moieties with from 6 to 12 carbon atoms, cycloaliphatic moieties with from 4 to 12 carbon atoms, and mixtures thereof. Preferred amines and amides are trimethyl amine, triisopropyl amine, triphenyl amine, tricyclohexyl amine, N,N-dimethyl analine, N-ethylacetamide, N,N-dimethylbenzamide, and acetanalide. Ammonia can also be employed.

Nitriles useful in the invention contain aliphatic moieties with from 1 to 12 carbon atoms, aromatic moieties with from 6 to 12 carbon atoms, cycloaliphatic moieties with from 4 to 12 carbon atoms. Preferred nitriles are acetonitrile and benzonitrile.

Particularly useful alkoxy silanes contain hydrogen, aliphatic moieties with from 1 to 12 carbon atoms, aromatic moieties with from 6 to 12 carbon atoms, cycloaliphatic moieties with from 4 to 12 carbon atoms, and mixtures thereof. Preferred alkoxy silanes are phenyltrimethoxy silane, n-propyltrimethoxy silane, cyclohexyltrimethoxy silane, cyclohexyltriethoxy silane, diphenyldimethoxy silane, diisobutyldimethoxysilane, di-t-butyldimethoxy silane, and di-t-butyldiethoxy silane.

Aluminum alkoxides employable in the invention contain aliphatic moieties with from 1 to 12 carbon atoms, aromatic moieties with from 6 to 12 carbon atoms, cycloaliphatic moieties with from 4 to 12 carbon atoms, and mixtures thereof. Preferred aluminum alkoxides are diethylaluminum ethoxide, diisobutylaluminum ethoxide, diisobutyl aluminum isobutoxide, diphenylaluminum ethoxide, dicyclohexylaluminum ethoxide, ethylaluminum diethoxide, isobutylaluminum diethoxide, isobutylaluminum diisobutoxide, phenylaluminum diethoxide, cyclohexylaluminum diethoxide, aluminum triethoxide, aluminum triisobutoxide, aluminum triisopropoxide, and mixtures thereof.

Preferred Lewis bases can include isopropanol, ethanol, tetrahydrofuran (THF), alkoxysilanes, polypropylene glycol, monoethanolamines, polyalkylene ether glycols other than polypropylene glycol such as polyethylene glycol, polybutylene glycol, polytetramethylene glycol, polyalkylene thioether glycols (e.g., polyethylene thioether glycol, polypropylene thioether glycol), polyimines, polyamines, polyamides, epoxidized polybutadienes, ammonia, pyridine, $Si(OEt)_4$, $BuNH_2$, $Bu_3N$, $PhNH_2$, n-ethylaniline, 2,6-di-tert-butylphenol, butylated hydroxy toluene, pyrrolidine, piperidine, ethanolamine, $HCONMe_2$, and N,N-diethylaniline. Of these, isopropanol, butylamines, and di-tert-butyl phenol are most preferred.

The amount of sacrificial monomer to aluminum that can be employed ranges from about 0.01:1 to about 20:1, preferably from about 1:1 to 6:1. That is, preferably the minimum amount of sacrificial olefin (e.g., ENB) needed to suppress oligomerization reactions is approximately 1 mole of sacrificial monomer feed per mole of cocatalyst (e.g., DEAC) feed. The amount of Lewis base to aluminum that can be employed ranges from about 0.04:1 to 0.9:1, preferably from about 0.04:1 to 0.5:1.

<u>Polymerization Process and Conditions</u>. The invention can be used for the gas phase polymerization of one or more alpha olefins, and optionally a diene (or diolefin). Gas phase processes employable in the present invention can include so-called "conventional" gas phase processes, "condensed-mode," and, most recent, "liquid-mode" processes. In these processes, it may be desirable to include a scavenger in the reactor to remove adventitious poisons such as water or oxygen before they can lower catalyst activity.

Conventional fluidized processes are disclosed, for example, in U.S. Patent Nos. 3,922,322; 4,035,560; 4,994,534, and 5,317,036.

Condensed mode polymerizations, including induced condensed mode, are taught, for example, in U.S. Patent Nos. 4,543,399; 4,588,790; 4,994,534; 5,317,036; 5,352,749; and 5,462,999.

Liquid mode or liquid monomer polymerization mode is described in U.S. Patent No. 5,453,471; and WO 96/04323 (PCT/US95/09826). For a polymerization utilizing a diene, it is preferable to use liquid mode and to employ an inert particulate material, a so-called fluidization aid or flow aid.

Inert particulate materials are described, for example, in U.S. Patent No. 4,994,534 and include carbon black, silica, clay, talc, activated carbon, and mixtures thereof. Organic polymeric materials (e.g., polymers and copolymers of an alpha olefin and polystyrene, in granular or powder form) can also be employed as fluidization aids. Activated carbon and modified carbon blacks as disclosed in EP 0 727,447 and WO 98/34960 can also be employed. Of these, carbon black, silica, and mixtures of them are preferred. When employed as fluidization aids, these inert particulate materials (carbon black, silica, clay, or talc, as well as activated carbon and modified carbon blacks) are used in amounts ranging from about 0.3 to about 80% by weight, preferably about 5 to 60%, most preferably 10 to 45%, based on the weight of the polymer produced. Organic polymeric materials are employed in amounts ranging from 0.3 to 50%, preferably 0.3 to 10% by weight based upon the weight of the final polymer produced.

The fluidization aid can be introduced into the reactor at or near the top of the reactor, at the bottom of the reactor, or to the recycle line directed into the bottom of the reactor. Preferably, the fluidization aid is introduced at or near the top of the reactor or above the fluidized bed. It is preferred to treat (i.e., dry) the fluidization aid prior to entry into the reactor to remove traces of moisture and oxygen. The fluidization aid can be added separately or combined with all or a portion of the monomer or with a soluble unsupported catalyst. Preferably, the fluidization aid is added separately.

The use of inert particulate materials as fluidization aids in polymerization typically produces a polymer having a core-shell configuration such as that disclosed in U.S. Patent No. 5,304,588. The polymer produced with one or more of these fluidization aids produces a resin particle comprising an outer shell having a mixture of a polymer and an inert particulate material, wherein the inert particulate material is present in the outer shell in an amount higher than 75% by weight based on the weight of the outer shell; and an inner core having a mixture of inert particulate material and polymer, wherein the polymer is present in the inner core in an amount higher than 90% by weight based on the weight of the inner core. These polymer particles are granular and free-flowing upon exiting the reactor and are produced by a fluidized bed polymerization process at or above the softening point of the sticky polymer.

The polymerizations can be carried out in a single reactor or multiple reactors, typically two or more in series, can also be employed. The essential parts of the reactor are the vessel, the bed, the gas distribution plate, inlet and outlet piping, at least one compressor, at least one cycle gas cooler, and a product discharge system. In the vessel, above the bed, there is a velocity reduction zone, and in the bed a reaction zone.

Generally, all of the above modes of polymerizing are carried out in a gas phase fluidized bed containing a "seed bed" of polymer which is the same or different from the polymer being produced. Preferably, the bed is made up of the same granular polymer that is to be produced in the reactor.

The bed is fluidized using a fluidizing gas comprising the monomer or monomers being polymerized, initial feed, make-up feed, cycle (recycle) gas, inert carrier gas (e.g., nitrogen, argon, or inert hydrocarbon having 2 to 12 carbon atoms such as ethane, propane, isopentane) and, if desired, modifiers (e.g., hydrogen). Thus, during the course of a polymerization, the bed comprises formed polymer particles, growing polymer particles, catalyst particles, and optional flow aids (fluidization aids) fluidized by polymerizing and modifying gaseous components introduced at a flow rate or velocity sufficient to cause the particles to separate and act as a fluid.

In general, the polymerization conditions in the gas phase reactor are such that the temperature can range from sub-atmospheric to super-atmospheric, but is typically from about 0 to 120°C, preferably about 40 to 100°C, and most preferably about 40 to 80°C. Partial pressure will vary depending upon the temperature of the polymerization, and it can range from about 1 to 300 psi (6.89 to 2,067 kiloPascals), preferably 1 to 100 psi (6.89 to 689 kiloPascals). Preferably, the EPR or EPDM gas phase process used in conjunction with the inventive method is conducted in a gas phase reactor or a semibatch gas phase reactor in the presence of an inert particulate material under reaction conditions such that at least a portion of at least one of the olefinic, diolefinic, or sacrificial monomers present is maintained at or below its dew point temperature.

Dienes when employed in the production of EPR can include: conjugated or non-conjugated dienes, such as linear, branched, or cyclic hydrocarbon dienes having from about 4 to about 20, preferably 4 to 12, carbon atoms. Preferred dienes include 1,4-pentadiene, 1,5-hexadiene, 5-vinyl-2-norbornene, 1,7-octadiene, 7-methyl-1,6-octadiene (MOD), vinylcyclohexene, dicyclopentadiene, butadiene, isobutylene, isoprene, ethylidene norbornene (ENB), and the like. Most preferred are: 5-ethylidene-2-norbornene and MOD.

<u>Catalysts</u>. The catalyst employed in the invention contains a vanadium catalyst precursor, aluminum cocatalyst and promoter (optional). It can be supported (on an inert carrier material such as carbon black, silica, magnesia, alumina, and/or activated carbon) or unsupported (as a slurry, solution, emulsion). The catalyst can be in the form of a prepolymer or sprayed dried (with or without a filler material).

When a support is employed, it can be impregnated with one or more of the individual catalyst components (precursor, cocatalyst, promoter). Generally, the catalyst precursor is impregnated and the other components are introduced separately into the polymerization. If used, the support can be silica, alumina, carbon black, activated carbon, or polymeric material with silica being the most preferred. Examples of polymeric supports are porous crosslinked polystyrene and polypropylene. A typical silica or alumina support is a solid, particulate, porous material essentially inert to the polymerization. It is used as a dry powder having an average particle size of about 10 to about 250 microns, preferably about 30 to 100 microns; a surface area of at least 200 square meters per gram, preferably at least about 250 square meters per gram; and a pore size of at least about 100 Angstroms, preferably at least about 200 Angstroms. Generally, the amount of support used is that which will provide about 0.1 to about 1.0 millimole of vanadium per gram of support, preferably about 0.4 to 0.9 millimole of vanadium per gram of support. Impregnation of the catalyst precursor or other component of the catalyst system onto a support such as silica is well known and can be accomplished, for example, by mixing the precursor and silica gel in an inert solvent followed by solvent removal under reduced pressure.

<u>Precursor</u>. The preferred catalyst precursor is vanadium (acetylacetonate)$_3$, (also referred to as vanadium triacetylacetonate or V(AcAc)$_3$) a compound having one vanadium cation and three enolate anions. Other useful vanadium compounds that can serve as the precursor in the invention can include VCl$_4$, VCl$_3 \cdot$ THF, VOCl$_3$, VOCl$_2$, VO-bisacetylacetonate, VO(OR)$_3$, and mixtures thereof. Procedures for making these precursors are well known.

<u>Cocatalyst</u>. The cocatalyst is an alkylaluminum compound having the formula AlR$_3$, AlR$_{(3-a)}$X$_a$, R$_2$AlH, R$_2$Al(OR) wherein each R is independently an alkyl having 1 to 14 carbon atoms, each X is independently a halogen (chlorine, bromine, or iodine), and $\underline{a}$ is 0, 1, or 2. It is understood that mixtures of these can also be employed in the invention.

Alkylaluminum halides included by the formula include alkylaluminum mono- and dihalides such as alkylaluminum mono- and dichlorides. Examples of such alkylaluminum halides are di-ethylaluminum chloride (DEAC); ethylaluminum dichloride, ethylaluminum sesquichloride; di-n-butylaluminum chloride; di-isobutylaluminum chloride; methylaluminum sesquichloride; isobutylaluminum sesquichloride; di-methylaluminum chloride; di-n-propylaluminum chloride; methylaluminum chloride. Examples of trialkylaluminum compounds which can be employed can include tri-isobutylaluminum, tri-hexylaluminum, di-isobutylhexylaluminum, isobutyl-di-hexylaluminum, tri-methylaluminum, tri-ethylaluminum, tri-propylaluminum, tri-isopropylaluminum, tri-n-butylaluminum, tri-octylaluminum, tri-decylaluminum, and tri-dodecylaluminum. Dibutylaluminum hydride can also preferably be used. A mixture of trialkylaluminum and alkylaluminum halide can be employed. The molar ratio of alkylaluminum halide to trialkylaluminum compound, if present, is at least about 1.5:1 to 10:1 and is preferably in the range of about 2:1 to 6:1, most preferably 5:1.

The cocatalyst can be present in the catalyst system in an amount of about 10 to about 500 moles of cocatalyst per gram-atom of vanadium. In a fluidized process, the cocatalyst can be introduced in an amount of about 1000 to 10,000 parts per million (ppm) by weight of resin present in the fluidized bed (including initial resin used to provide the fluidized bed; resin produced; and fluidization aid, if present). Preferably the amount ranges from about 1500 to about 8000 ppm resin.

The cocatalyst is preferably added separately neat or as a solution in an inert solvent such as isopentane to the polymerization reactor at the same time as the flow of monomer is initiated. Alternatively, the cocatalyst can be co-fed with one or more monomers or with the inert particulate material.

Promoter. The optional promoter can be a chlorinated ester having at least 2 chlorine atoms or a perchlorinated ester. It can be impregnated into a support, if desired. Suitable esters are $Cl_3CCOOC_2H_5$ (ethyl trichloroacetate or ETCA); $Cl_3CCOOCH_3$ (methyl trichloroacetate); $CCl_3CCl=CClCOOC_4H_9$; $C_6H_5CCl_2COOR$ wherein R is an alkyl radical having 1 to 8 carbon atoms; and $Cl_2C=CCl-CCl_2COOC_4H_9$. The promoter can also be a saturated aliphatic halo-carbon having the formula $C_3(X)_a(F)_b(H)_c$ wherein each X is independently chlorine, bromine, or iodine; $a$ is an integer from 6 to 8; $b$ and $c$ are integers from 0 to 2; and $a+b+c=8$. Examples of these halocarbon promoters are hexachloropropane, heptachloropropane, and octachloropropane. These saturated halocarbon promoters are enumerated in U.S. Patent No. 4,892,853. In addition the promoter can also be an unsaturated aliphatic halocarbon such as perchloropropene or any unsaturated halocarbon having a $CX_3$ group attached to a C=C group wherein each X is independently chlorine, bromine, or iodine, or a haloalkyl substituted aromatic hydrocarbon wherein the haloalkyl substituent has at least 3 halogen atoms such as trichlorotoluene and trichloroxylene. The number of benzene rings in the halocarbon or the aromatic hydrocarbon can be 1 to 3, but is preferably 1.

About 0.01 to about 10 moles, preferably about 0.1 to about 2 moles of a promoter can be used per mole of cocatalyst. In a fluidized bed process, the promoter can be introduced in an amount ranging from about 500 to about 2500 ppm by weight of resin present, preferably in an amount ranging from 1000 to 2000 ppm by weight of the resin. The promoter is preferably added separately neat or as a solution in an inert solvent such as isopentane to the polymerization reactor, usually at about the same time as the flow of monomer is initiated. However, the promoter can also be added to the propylene feed and this mixture fed in turn to the reactor.

Examples of polymers that can be produced using the method of the invention include ethylene-propylene rubbers; ethylene-propylene-diene rubbers; polybutadiene rubbers; polyisoprenes; high ethylene content propylene-ethylene block copolymers; poly(1-butene) (when produced under certain reaction conditions); very low density (low modulus) polyethylenes, i.e., ethylene butene rubbers or hexene containing terpolymers; especially ethylene-propylene-ethylidene norbornene terpolymer, ethylene-propylene-hexadiene terpolymer, and ethylene-propylene-octadiene terpolymer.

All references cited herein are incorporated by reference.

Whereas the scope of the invention is set forth in the appended claims, the following, examples illustrate certain aspects of the present invention. The examples are set forth for illustration and are not to be construed as limitations on the invention except as set forth in the claims. In the specification, unless otherwise specified, all parts and percentages are by weight.

## Examples

While other more complex procedures can be employed in the determination of oligomer and gel suppression the following simple procedures below were employed as diagnostic probes to measure the effectiveness of this invention as illustrated in Examples 1 through 11. A polymer product can contain 10% gels and/or oligomers or more, and the process of the invention reduces this amount by 95% or greater.

Oligomer Determination. The formation of oligomers can be determined by using gas chromatography to analyze for C4 (butenes) and C6(hexenes) or even higher molecular weight oligomers that form in the headspace of the reactor in which a polymerization reaction is conducted. That is, these gases are measured as a by-product in the reactor gas. Since butenes are the easiest to detect these were always monitored by means of a diagnostic probe.

Gel Suppression Probe. Gels are believed to result from intermolecular acidic crosslinking of diene (e.g., ENB) molecules incorporated in a polymer backbone. Measuring crosslink reactions between polymer molecules is difficult. Gel suppressing agents were identified as those agents that when mixed with a diene such as ENB did not result in the polymerization of the diene. Agents were sampled to a bottle containing a diene such as ENB along with various catalyst components that lead to crosslink reactions. When no solid poly-ENB product formed, these agents were effective in preventing gel formation.

The following procedure was used to monitor oligomer formation at a commercial EPR/EPDM facility and in Examples 12 through 14.

From a knock-out pot in the propylene vent recovery compressor, viscous material that had collected for a given period of time was drained and weighed to determine a rate of formation. The material collected in the knock-out pot generally consisted of poly-oils.

A more sophisticated technique for determining gel formation in EPDM employed a dynamic mechanical analyzer (DMA) or rubber process analyzer (RPA-2000 available from Monsanto). Using the equipment, a plot of applied frequency vs. tangent delta was used to determine crosslinking and/or gel formation. Tangent delta is defined as the ratio of the viscous to elastic response to an applied strain. As the polymer being formed becomes more crosslinked and accordingly higher in gel content, the elastic portion of the response increased while the viscous portion of the response remained more or less constant. The effect of gel formation was seen as a lowering of tangent delta. Another useful indication of gel formation was the use of the difference in tangent deltas between two characteristic frequencies --one near the maximum tangent delta and another at a higher frequency (also called the "delta-delta"). As the delta-delta decreased for a given sample, the degree of cross-linking and/or gel formation increased.

The invention is demonstrated by the following examples. In Examples 1-8, ethylene homopolymerizations or oligomerizations were carried out in 4-liter gas phase reactor. NaCl salt (200g) bed was used in each run. Ethylene was the only monomer used in the runs and the reactor pressure was kept at 100 psi. All oligomerizations were carried out at 40°C. Solid catalyst components such as silica supported $V(AcAc)_3$ were introduced to the reactor before pressurizing with ethylene. Liquid components such as DEAC and ETCA solutions were injected to the reactor under ethylene pressure. Reactor head space composition was monitored with gas chromatography (GC). Both butenes, hexenes and even higher oligomers can be detected during oligomerization. Since GC separation of butene isomers is easier than hexene isomers, butene concentration (wt%) in the head space of the reactor was monitored as a diagnostic probe for ethylene olgomerizatiom activity.

Gel formation in EPDM polymer was believed to be the result of intermolecular acidic crosslinking of ENB molecules incorporated in the polymer backbone. Effective polymer gel suppressing agents were those which were able to prevent ENB from polymerizing. A test had been devised which identified those reagents that prevent ENB polymerization and would be effective gel inhibitors (Examples 9-11).

Example 1. (Comparative) Oligomerization Reaction: The reactor with salt bed was baked out at 100°C under nitrogen purge for 2 hours. The reactor was cooled down to 40°C under nitrogen. $V(AcAc)_3/SiO_2$ catalyst (0.134gram, 0.067mmol vanadium) and 1ml ETCA solution (2mmol ETCA) were added to the reactor. The reactor was pressurized with ethylene. Reactor head space gas sample was taken for GC analysis prior to DEAC addition. Ethylene was the only monomer detected by GC even after one hour stirring without adding DEAC cocatalyst. This indicated that oligomerization reactions were not catalyzed by $V(AcAc)_3$ and ETCA. DEAC solution (5ml, 7.5mmol DEAC) was injected to the reactor under ethylene pressure. Reactor head space gas samples were taken for GC analyses at 10, 40 and 70 minutes respectively. It was found that the butene concentration (wt%) in the head space was 11%, 21.5% and 22.5% at 10 minutes, 40 minutes and 70 minutes respectively. These data indicated that the ethylene dimerization activity was high and the dimerization reaction was catalyzed by DEAC. After the completion of the ethylene homopolymerization, the salt/polymer mixture was washed in water and filtered. The polymer was dried in oven at 60°C overnight and then weighted for 52.3 grams.

Example 2. Effect of ENB (Sacrificial Olefin) on Oligomer (Butene) Formation. A similar experiment as Example 1 was carried out, except that 2ml of ENB was added (ENB/DEAC=2.0) to the reactor before the injection of DEAC cocatalyst. During the ethylene homopolymerization, the reactor head space gas was also analyzed for butene content. It was found that the butene concentration in the head space was only 0.1%, 0.3% and 0.7% at 10 minutes, 40 minutes and 70 minutes respectively. This indicated that oligomer formation was almost completely eliminated by the presence of ENB. After the completion of the polymerization, 22.8g of polyethylene polymer was collected.

Example 3. Effect of Norbornene (Sacrifical Olefin) on Oligomer (Butene) Formation. A similar experiment as Example 1 was carried out except that 15 mmol of norbornene (norbornene/DEAC=2.0) was added to the reactor before the injection of DEAC. During ethylene homopolymerization, the reactor head space gas was also analyzed for butene content. It was found that the butene concentration in the head space was 1.8%, 11.8% and 15% at 10 minutes, 40 minutes and 70 minutes respectively. This indicated that norbornene also suppresses butene formation but the suppressing ability is not as strong as ENB. After the completion of the polymerization, 54.7g of polyethylene polymer was collected.

Example 4. Effect of Isobutylene (Sacrifical Olefin) on Oligomer (Butene) Formation. A similar experiment as Example 1 was carried out, except that 5 psi of isobutylene gas was introduced to the reactor prior to pressuring the reactor with ethylene. During ethylene homopolymerization, the reactor head space gas was analyzed for butene content. It was found that the butene concentration in the head space was 10.9%, 13.8% and 17.6% at 10 minutes, 40 minutes and 70 minutes respectively. A comparison with Example 1 indicated that isobutylene only slightly suppressed butene formation in ethylene homopolymerization. After the completion of the polymerization, 45.2g of polyethylene polymer was collected.

Example 5. Effect of THF (Lewis Base, High Level THF/Al=1) on Oligomer (Butene) Formation. A similar experiment as Example 1 was carried out, except that 7.5mmol THF (THF/DEAC=1) was added to the reactor before the injection of DEAC. During ethylene homopolymerization, the reactor head space gas was analyzed for butene content. It was found that the butene concentration in the head space was 0.1%, 0.2% and 0.2% at 10 minutes, 40 minutes and 70 minutes respectively. This indicated that the butene formation reaction is completely eliminated by adding THF with the ratio of THF/Al=1. However, after the completion of the polymerization, only 3.2g of polyethylene polymer was collected. This demonstrated that the ethylene homopolymerization is also suppressed by THF.

Example 6. Effect of THF (Low Level THF/Al=0.56) on Oligomer (Butene) Formation. A similar experiment as Example 5 was carried out, except that 13.5 mmol DEAC was used (THF/DEAC=0.56). The GC analysis of the reactor head space during polymerization showed 6.2%, 10.1% and 9.3% of butene at 10 minutes, 40 minutes and 70 minutes respectively. After the completion of the polymerization, 72.8g of polyethylene was collected. This experiment indicated that the low level of THF (THF/Al=0.56) significantly suppressed oligomer formation activity (more than 50%) and at the same time significantly boosted ethylene polymerization activity (by about 40% from 52.3g polymer to 72.8g polymer) of the catalyst system.

Example 7. Effect of Tert-butylamine (Lewis Base) on Oligomer (Butene) Formation. A similar experiment as Example 1 was carried out, except that 4mmol of t-butylamine was added to the reactor before the injection of DEAC (t-butylamine/Al=0.53). The GC analysis of the reactor head space during polymerization showed 0.8%, 1.6% and 5.7% at 10 minutes, 40 minutes and 70 minutes respectively. After the completion of the polymerization, 31.6g of polyethylene polymer was collected. This indicated that t-butylamine almost completely eliminated butene formation reaction but only slightly decreased polymerization activity of the catalyst system.

Example 8. Effect of Di-butylamine (Lewis Base) on Oligomer (Butene) Formation. A similar experiment as Example 7 was carried out, except that 4mmol of dibutylamine was used instead of t-butylamine. It was found that 1.0%, 1.8% and 2.1% of butene was detected during polymerization at 10 minutes, 40 minutes and 70 minutes respectively. After the completion of the polymerization, 42.6g of polyethylene was collected. This experiment demonstrated that di-butylamine was a good Lewis base which suppressed oligomerization completely but only slightly decreased polymerization activity of the catalyst.

Example 9. ENB Polymerizations (Comparative Gel Suppression Test). Under nitrogen, at ambient temperatures, 20 mL of neat ENB was treated with 3.0 mmole of diethyl aluminum chloride (DEAC). After 24 hours, unreacted ENB was removed by precipitation of the solid polymer with methanol, isolation of the solid polymer followed by vacuum oven drying. Nine percent of the neat ENB had been polymerized by addition of DEAC.

Example 10. Effect of Ethanol on ENB Polymerization. Employing the identical reaction conditions as those used in Example 9, less than 0.5% of the ENB was polymerized when 3 eq of ethanol per aluminum was added to the mixture. Here, the ethanol had dramatically quenched the ENB polymerization reaction and, as such, ethanol was an effective gel suppression agent.

Example 11. Effect of THF on ENB Polymerization. Employing the identical reaction conditions as those used in Example 9, less than 0.6% of the ENB was polymerized when 3 eq of tetrahydrofuran per aluminum was added to the mixture. Here, the THF had dramatically quenched the polymerization reaction of ENB on DEAC.

Example 12. Polyoils formed during EPDM production (low ENB concentration).

A commercial scale continuous fluidized bed gas phase reactor was utilized to produce 15,000 lb/hr EPDM. Catalyst was V(acac)$_3$ on silica, reaction temperature was 40°C, DEAC flow was 110 lb/hr, ETCA flow was 27 lb/hr, and ENB flow to the reactor was 30 lb/hr. Over the course of 7 days, about 24 gallons per day of polyoils were drained from the propylene vent recovery compressor.

Example 13. Polyoils formed during EPDM production (normal ENB concentration).

Employing similar reaction conditions to Example 12, except for ENB feed (200 lb/hr), no polyoils were collected from the propylene vent recovery compressor. In this example, trace levels of ENB are employed to prevent formation of polyoils/oligomers.

Example 14. Polyoils formed during EPDM production (normal ENB concentration).

Employing similar reaction conditions to Example 12, except for ENB feed (570 lb/hr), no polyoils were collected from the propylene vent recovery compressor.

Example 15. Gel formation during EPDM production (no Lewis base added).

A pilot scale continuous fluidized bed gas phase reactor was utilized to produce 80 lb/hr EPDM. Catalyst was V(acac)$_3$ on silica, reaction temperature was 45°C, a 5:1 DEAC:TEAL solution was used as cocatalyst at 7000 ppmw, and ETCA was used as a catalyst promoter at 2000 ppmw (based on production rate). After polymerization, the aluminum alkyls were quenched using methanol applied at a rate of about 1.4 moles MeOH to 1 mole aluminum alkyl. The product was then purged for 3 hours in a fluidized bed with nitrogen at 1.3 ft/sec. gas velocity and 100°C bed temperature. This material was tested in the RPA-2000 utilizing the following conditions: temperature = 125°C, strain = 0.5°, frequency = 0.5 to 2000 cycles per minute. Data collected included frequency vs. tangent delta. The maximum tangent delta and the difference in tangent deltas between 6 and 300 cpm (delta delta) were 0.416 and -0.012.

Example 16. Gel formation during EPDM production (Lewis base added).

Employing similar reaction conditions to Example 15, except for the addition of about 700 ppmw 2,6,-di-tertbutylphenol to the reactor, maximum tangent delta and delta delta were 0.854 and 0.351. This indicated a lower degree of gel formation as compared to Example 15.

**Claims**

1. A method for reducing the formation of gels, oligomers, or both in a gas phase polymerization of at least one olefinic or diolefinic monomer in the presence of a vanadium catalyst system and an inert particulate material, which method comprises adding at least one sacrificial monomer or Lewis base.

2. The method of claim 1 wherein the vanadium catalyst has a precursor selected from the group consisting of vanadium(acetylacetonate)$_3$, VCl$_4$, VCl$_3$THF, VOCl$_3$, VOCl$_2$, VO-bisacetylacetonate, VO(OR)$_3$, and mixtures thereof; a cocatalyst which is an alkylaluminum compound having the formula AlR$_3$, AlR$_{(3-a)}$X$_a$, R$_2$AlH, R$_2$Al(OR) wherein each R is independently an alkyl having 1 to 14 carbon atoms, each X is independently a halogen, and $\underline{a}$ is 0, 1 or 2.

3. The method of claim 2 wherein the monomers being polymerized are ethylene, propylene, and optionally a diene selected from the group consisting of 1,4-pentadiene, 1,5-hexadiene, 5-vinyl-2-norbornene, 1,7-octadiene, 7-methyl-1,6-octadiene, vinylcyclohexene, dicyclopentadiene, butadiene, isobutylene, isoprene, ethylidene norbornene, and mixtures thereof; the catalyst precursor is silica supported vanadium (acetyacetonate)$_3$; the cocatalyst is diethylaluminum chloride or a mixture of diethylaluminum chloride and triethylaluminum; and the sacrificial monomer is selected from the group consisting of norbornene and isobutylene or the Lewis base is selected from the group consisting of ammonia, tetrahydrofuran, tertbutylamine, dibutylamine, butylated hydroxy toluene, di-tert-butylphenol, vitamin E, and isopropanol.

4. The method of any one of the preceding claims wherein there is employed a promoter comprising a chlorinated or perchlorinated ester.

5. The method of any one of the preceding claims wherein the Lewis base is selected from the group consisting of ethers, alcohols, ketones, aldehydes, carboxylic acids, esters, carbonates, phosphines, phosphine oxides, phosphates, phosphites, amines, amides, nitriles, alkoxy silanes, aluminum alkoxides, ester, oxygen, nitric oxides, and mixtures thereof; and wherein the sacrificial monomer is selected from the group consisting of olefinic and diolefinic hydrocarbons and vinyl aromatic compounds.

6. The method of any one of the preceding claims wherein the sacrificial monomer is selected from the group consisting of ethylidene norbornene, norbornene, isobutylene, isoprene, alpha-methyl styrene, C$_4$-C$_{20}$ alpha olefins, and mixtures thereof; and wherein the Lewis base is selected from the group consisting of ammonia, butylamine, di-tertbutyphenol, t-butylamine, isopropanol, tetrahydrofuran butylated hydroxy toluene, vitamin E, and mixtures thereof.

7. The method of any one of the preceding claims wherein the Lewis base to aluminum ratio ranges from 0.1 to 0.9; and wherein the sacrificial monomer to aluminum ratio ranges from 0.01 to 20.

8. The method of any one of the preceding claims wherein the polymerization is conducted in a continuous gas phase reactor or a semibatch gas phase reactor in the presence of an inert particulate material selected from the group consisting of carbon black, silica, clay, talc, activated carbon, polymeric material, modified carbon black, and mixtures thereof under reaction conditions such that at least a portion of the at least one olefinic monomer, diolefinic monomer, or sacrificial monomer is maintained at or below its dew point temperature.

9. The method of claim 8 wherein the polymerization employs an inert gas selected from the group consisting of nitrogen, argon, a $C_2$-$C_{12}$ alkane, and mixtures thereof.

**10.** The method of any one of the preceding claims wherein the sacrificial monomer or Lewis base is added to the reactor neat or as a solution in a volatile organic solvent.

**11.** The method of any one of the preceding claims wherein the Lewis base selected from the group consisting of ammonia, di-tert-butylphenol, butylated hydroxy toluene, vitamin E, and a mixture thereof is added to the reactor during polymerization and added to the product so produced during post reactor processing.

**12.** The method of any one of the preceding claims wherein the sacrificial monomer or Lewis base is mixed with the olefinic or diolefinic monomer prior to its introduction into the reactor.

European Patent
Office

**EUROPEAN SEARCH REPORT**

Application Number

EP 00 30 4999

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 614 917 A (UNION CARBIDE CHEM PLASTIC) 14 September 1994 (1994-09-14) * claims; examples * | 1-12 | C08F10/00 C08F2/00 C08F2/34 C08F2/44 C08F4/68 |
| X | US 4 994 534 A (KAROL FREDERICK J ET AL) 19 February 1991 (1991-02-19) * claims; examples 5,6,11-13 * | 1-12 | |
| A | US 5 453 471 A (SCAROLA LEONARD S ET AL) 26 September 1995 (1995-09-26) * claims; examples * | 1-12 | |
| A | EP 0 372 926 A (EXXON CHEMICAL PATENTS INC) 13 June 1990 (1990-06-13) * page 4, line 38 - line 46; claims * | 1-12 | |
| | | | **TECHNICAL FIELDS SEARCHED (Int.Cl.7)** |
| | | | C08F |

The present search report has been drawn up for all claims

| Place of search | Date of completion of the search | Examiner |
|---|---|---|
| THE HAGUE | 18 September 2000 | Kaumann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 00 30 4999

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2000

| Patent document cited in search report | | Publication date | Patent family member(s) | | Publication date |
|---|---|---|---|---|---|
| EP 0614917 | A | 14-09-1994 | US | 5376743 A | 27-12-1994 |
| | | | AT | 165846 T | 15-05-1998 |
| | | | BR | 9401117 A | 25-10-1994 |
| | | | CA | 2118742 A | 12-09-1994 |
| | | | CN | 1099396 A | 01-03-1995 |
| | | | DE | 69410001 D | 10-06-1998 |
| | | | DE | 69410001 T | 05-11-1998 |
| | | | ES | 2115092 T | 16-06-1998 |
| | | | JP | 2951199 B | 20-09-1999 |
| | | | JP | 6322032 A | 22-11-1994 |
| | | | KR | 165139 B | 20-03-1999 |
| | | | US | 5510433 A | 23-04-1996 |
| US 4994534 | A | 19-02-1991 | AT | 190069 T | 15-03-2000 |
| | | | AU | 620736 B | 20-02-1992 |
| | | | AU | 6316190 A | 11-04-1991 |
| | | | BR | 9004882 A | 10-09-1991 |
| | | | CA | 2026338 A | 29-03-1991 |
| | | | CN | 1051737 A | 29-05-1991 |
| | | | DE | 69033470 D | 06-04-2000 |
| | | | DE | 69033470 T | 10-08-2000 |
| | | | EP | 0422452 A | 17-04-1991 |
| | | | ES | 2142788 T | 01-05-2000 |
| | | | HU | 63640 A | 28-09-1993 |
| | | | JP | 1927993 C | 12-05-1995 |
| | | | JP | 3217402 A | 25-09-1991 |
| | | | JP | 6047606 B | 22-06-1994 |
| | | | KR | 9506119 B | 09-06-1995 |
| | | | MX | 22641 A,B | 01-04-1993 |
| | | | NO | 904203 A | 02-04-1991 |
| | | | NZ | 235485 A | 26-03-1992 |
| | | | PH | 26958 A | 28-12-1992 |
| | | | PT | 95453 A | 22-05-1991 |
| | | | TR | 24892 A | 01-07-1992 |
| | | | US | 5304588 A | 19-04-1994 |
| | | | ZA | 9007745 A | 31-07-1991 |
| US 5453471 | A | 26-09-1995 | AT | 184886 T | 15-10-1999 |
| | | | AU | 691957 B | 28-05-1998 |
| | | | AU | 3211395 A | 04-03-1996 |
| | | | AU | 687604 B | 26-02-1998 |
| | | | AU | 3211495 A | 04-03-1996 |
| | | | AU | 692586 B | 11-06-1998 |
| | | | AU | 3237395 A | 04-03-1996 |
| | | | BR | 9503534 A | 16-04-1996 |
| | | | BR | 9508515 A | 21-10-1997 |

For more details about this annex : see Official Journal of the European Patent Office, No. 12/82

## ANNEX TO THE EUROPEAN SEARCH REPORT
## ON EUROPEAN PATENT APPLICATION NO.  EP 00 30 4999

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2000

| Patent document cited in search report | | Publication date | Patent family member(s) | | Publication date |
|---|---|---|---|---|---|
| US 5453471 | A | | BR | 9508517 A | 21-10-1997 |
| | | | CA | 2155236 A,C | 03-02-1996 |
| | | | CA | 2196664 A | 15-02-1996 |
| | | | CN | 1133298 A | 16-10-1996 |
| | | | CN | 1158624 A | 03-09-1997 |
| | | | CN | 1171793 A | 28-01-1998 |
| | | | CZ | 9700296 A | 11-06-1997 |
| | | | CZ | 9700297 A | 11-06-1997 |
| | | | CZ | 9700320 A | 11-06-1997 |
| | | | DE | 69512421 D | 28-10-1999 |
| | | | DE | 69512421 T | 04-05-2000 |
| | | | EP | 0697421 A | 21-02-1996 |
| | | | EP | 0773964 A | 21-05-1997 |
| | | | EP | 0773963 A | 21-05-1997 |
| | | | EP | 0773965 A | 21-05-1997 |
| | | | EP | 0856531 A | 05-08-1998 |
| | | | EP | 0856530 A | 05-08-1998 |
| | | | ES | 2143062 T | 01-05-2000 |
| | | | FI | 970457 A | 18-04-1997 |
| | | | HU | 78022 A | 28-05-1999 |
| | | | HU | 78018 A | 28-05-1999 |
| | | | HU | 76682 A | 28-10-1997 |
| | | | JP | 3065234 B | 17-07-2000 |
| | | | JP | 8100009 A | 16-04-1996 |
| | | | JP | 10503799 T | 07-04-1998 |
| | | | JP | 3044065 B | 22-05-2000 |
| | | | JP | 10503800 T | 07-04-1998 |
| | | | NO | 970464 A | 21-03-1997 |
| | | | PL | 318524 A | 23-06-1997 |
| | | | PL | 318526 A | 23-06-1997 |
| | | | PL | 318527 A | 23-06-1997 |
| | | | SK | 14897 A | 10-09-1997 |
| | | | WO | 9604322 A | 15-02-1996 |
| | | | WO | 9604323 A | 15-02-1996 |
| | | | WO | 9604321 A | 15-02-1996 |
| | | | US | 6096840 A | 01-08-2000 |
| | | | US | 5834571 A | 10-11-1998 |
| | | | ZA | 9506456 A | 14-03-1996 |
| EP 0372926 | A | 13-06-1990 | AU | 4812590 A | 26-06-1990 |
| | | | CA | 2004614 A | 06-06-1990 |
| | | | JP | 2832753 B | 09-12-1998 |
| | | | JP | 3502473 T | 06-06-1991 |
| | | | WO | 9006326 A | 14-06-1990 |
| | | | US | 5350818 A | 27-09-1994 |